# EUROPÄISCHE PATENTSCHRIFT

(11) **EP 3 521 150 B1**
(45) Veröffentlichungstag und Bekanntmachung des Hinweises auf die Patenterteilung: **24.06.2020**
(21) Anmeldenummer: 19151269.8
(22) Anmeldetag: 10.01.2019
(51) Int. Cl.: B62K 15/00

(54) **RAHMENVORRICHTUNG FÜR EIN NEIGEFAHRZEUG SOWIE NEIGEFAHRZEUG**
FRAME DEVICE FOR A LEANING VEHICLE AND LEANING VEHICLE
DISPOSITIF DE CADRE POUR VEHICULE INCLINABLE ET VEHICULE INCLINABLE

(30) Priorität: 05.02.2018 DE 102018102544
(43) Veröffentlichungstag der Anmeldung: 07.08.2019
(73) Patentinhaber: Kruschhausen, Tobias, 70814 Stuttgart (DE)
(72) Erfinder: Kruschhausen, Tobias, 70814 Stuttgart (DE)
(74) Vertreter: Schorr, Peter Karl

(56) Entgegenhaltungen:
- DE-A1- 3 629 962
- DE-A1- 10 333 737
- DE-U1- 29 608 659
- DE-U1-202016 006 639
- FR-A- 1 422 434
- JP-A- H1 045 081
- JP-A- 2003 146 281
- JP-U- S4 983 738
- US-A- 569 354
- US-A- 598 811
- US-A- 1 096 504
- US-A- 4 417 745

## Beschreibung

Die Erfindung betrifft eine Rahmenvorrichtung für ein Neigefahrzeug mit mindestens einem trapez- oder dreiecksförmigen Rahmen, der mindestens ein Sattelrohr, in dem oder an dem zumindest eine Satteleinheit des Neigefahrzeugs anordenbar oder angeordnet ist, der mindestens ein Steuerrohr, in dem oder an dem zumindest eine Lenkereinheit des Neigefahrzeugs anordenbar oder angeordnet ist, der mindestens ein zwischen Sattelrohr und Steuerrohr angeordnetes und an Sattelrohr und Steuerrohr festgelegtes Oberrohr und der mindestens ein zwischen Sattelrohr und Steuerrohr angeordnetes und an Sattelrohr und Steuerrohr festgelegtes Unterrohr umfasst, welches zumindest am Sattelrohr berührungsfrei zum Oberrohr beabstandet festgelegt ist, wobei der Rahmen teilbar ist und ein vorderes Rahmenteil, das das Steuerrohr, einen vorderen Abschnitt des Oberrohrs und einen vorderen Abschnitt des Unterrohrs umfasst, und ein hinteres Rahmenteil aufweist, das das Sattelrohr, einen hinteren Abschnitt des Oberrohrs und einen hinteren Abschnitt des Unterrohrs umfasst, und mit mindestens einer Koppeleinrichtung, durch die vorderes Oberrohr und hinteres Oberrohr und/oder vorderes Unterrohr und hinteres Unterrohr miteinander fluchtend aneinander lösbar festlegbar sind, wobei die Koppeleinrichtung ein vorderes Koppelmittel umfasst, das sich von einem freien Ende des vorderen Abschnitts des Oberrohrs bis zu einem freien Ende des vorderen Abschnitts des Unterrohrs stegartig erstreckt und an den freien Enden der vorderen Abschnitte des Oberrohrs und des Unterrohrs festgelegt ist und wobei die Koppeleinrichtung ein hinteres Koppelmittel umfasst, das sich von einem freien Ende des hinteren Abschnitts des Oberrohrs bis zu einem freien Ende des hinteren Abschnitts des Unterrohrs stegartig erstreckt und an den freien Enden der hinteren Abschnitte des Oberrohrs und des Unterrohrs festgelegt ist, wobei vorderes Koppelmittel und hinteres Koppelmittel in der gefügten Anordnung des Rahmens zumindest bereichsweise flächenhaft aneinander anliegen und wobei die Koppeleinrichtung eine Spanneinheit umfasst, durch die das vordere Rahmenteil und das hintere Rahmenteil entlang einer Fügerichtung aneinander festlegbar sind sowie ein Neigefahrzeug mit einer derartigen Rahmenvorrichtung.

Rahmenvorrichtungen der eingangs genannten Art dienen beispielsweise bei Fahrrädern dazu, das Fahrrad bezüglich seiner Längserstreckung verkürzen zu können, beispielsweise um es leichter transportieren zu können oder um es platzsparend zu lagern, wie in einem Kofferraum oder dergleichen. Bekannte Fahrräder mit teilbaren oder faltbaren Diamantrahmen, also mit Sattelrohr, Oberrohr, Steuerrohr und Unterrohr, sind im Hinblick auf Fahreigenschaften, Handhabung und Design oft nicht zufriedenstellend. Weitere bekannte teilbare Rahmenvorrichtungen weichen daher von der Verwendung eines Oberrohrs und eines Unterrohrs zur Bildung eines klassischen Diamant-Rahmens ab, um die Fahreigenschaften durch das Wählen einer anderen Rahmengeometrie zu verbessern.

Eine Rahmenvorrichtung, bei der der hintere Abschnitt des Oberrohrs in den vorderen Abschnitt des Oberrohrs und der hintere Abschnitt des Unterrohrs in den vorderen Abschnitt des Unterrohrs gesteckt werden, ist bekannt aus US 20090256330A1. Bei der dort gezeigten Rahmenvorrichtung bilden lackierte Metallflächen die Kontaktflächen an den Trennstellen des Neigefahrzeugrahmens. Dies führt durch den Gebrauch nach einiger Zeit zu Abnutzung und einer Beschädigung der Lackschicht, wodurch die Gefahr von Korrosion erhöht ist. Darüber hinaus ist bei der dort gezeigten Rahmenvorrichtung fertigungsbedingt immer ein gewisses Spiel zwischen den hinteren Abschnitten und den vorderen Abschnitten, so dass diese auf einfache Weise ineinander teleskopartig schiebbar sind. Dieses führt auch in der gefügten Anordnung zu einem verbleibenden Spiel und verschlechterten Fahreigenschaften.

Aus DE 694 32 473 T2 ist eine Rahmenvorrichtung bekannt, bei der das Verbinden der Abschnitte des Oberrohrs und des Unterrohrs durch jeweils eine Spannmutter erfolgt, die zum Fügen der Abschnitte mittels eines Werkzeugs übergestülpt und aufgeschraubt wird. Dieses erweist sich als zeitaufwändig und umständlich, da zum Fügen und Lösen ein Werkzeug mitgeführt werden muss.

Gattungsgemäße Rahmenvorrichtungen sind bekannt aus JP H10 45081 A und JP S49 83738 U.

Aufgabe eines Ausführungsbeispiels der Erfindung ist, eine teilbare Rahmenvorrichtung vorzuschlagen, bei der die Fahreigenschaften verbessert sind und die Handhabung erleichtert ist.

Diese Aufgabe wird bei einer eingangs genannten Rahmenvorrichtung dadurch gelöst, dass die Spanneinheit mindestens ein einen Spannhebel und ein Spannglied umfassendes Spannmittel, insbesondere ein Schnellspannmittel, am vorderen Koppelmittel oder am hinteren Koppelmittel und mindestens ein mit dem Spannmittel funktional zusammenwirkendes Aufnahmemittel am hinteren Koppelmittel bzw. am vorderen Koppelmittel umfasst, an dem oder in dem das Spannmittel mit dem Spannglied einen Hintergriff bezüglich der Fügerichtung bildend festlegbar ist.

Das vordere Rahmenteil umfasst durch vorderes Koppelmittel, vorderen Abschnitt des Oberrohrs, vorderen Abschnitt des Unterrohrs und Steuerrohr, einen in sich geschlossenen Rahmen, wodurch die Steifigkeit und Belastbarkeit des vorderen Rahmenteils erhöht ist.

Das hintere Rahmenteil umfasst durch hinteres Koppelmittel, hinteren Abschnitt des Oberrohrs, hinteren Abschnitt des Unterrohrs und Sattelrohr, einen in sich geschlossenen Rahmen, wodurch die Steifigkeit und Belastbarkeit des hinteren Rahmenteils erhöht ist.

Darüber hinaus ist ein vorderes Kuppelmittel und ein hinteres Kuppelmittel vorgesehen, die in der gefügten Anordnung des Rahmens zumindest bereichsweise flächenhaft aneinander anliegen, die ein Spiel zwischen hinterem Rahmenteil und vorderem Rahmenteil in der gefügten Anordnung verhindern oder zumindest reduzieren, wodurch die Gesamtsteifigkeit des Systems aus vorderem Rahmenteil und hinterem Rahmenteil erhöht ist.

Die Koppeleinrichtung kann grundsätzlich beliebig ausgebildet sein. Beispielsweise können vorderes Rahmenteil und hinteres Rahmenteil lösbar oder unlösbar aneinander festgelegt sein. Wenn das vordere Rahmenteil lösbar an dem hinteren Rahmenteil festlegbar ist, kann dieses beispielsweise mit dem hinteren Rahmenteil verschraubt sein.

Vorderes Koppelmittel und hinteres Koppelmittel können in einer gefügten Anordnung des Rahmens zumindest abschnittsweise flächenhaft aneinander anliegen.

Unter einem Neigefahrzeug werden durch Muskelkraft und/oder durch einen Elektromotor betriebene Fahrräder sowie elektrisch und/oder brennkraftbetriebene Motorräder oder motorradähnliche Kraftfahrzeuge, wie Motorroller, insbesondere zwei-, drei- oder vierrädrige Motorroller, Scooter, neigbare Trikes, Quads oder dergleichen verstanden.

Die Fügerichtung kann parallel zur Längserstreckungsrichtung des Oberrohrs verlaufen. Durch das einen Spannhebel und ein Spannglied umfassendes Spannmittel lässt sich die Spanneinheit leicht und schnell manuell bedienbar herstellen.

Das Spannglied kann beispielsweise hakenartig, schlaufenartig oder bolzenartig ausgebildet sein und in einer Nut im Aufnahmemittel angeordnet werden. Durch den Spannhebel ist die Rahmenvorrichtung schnell und einfach manuell fügbar und wieder trennbar.

Um die Stabilität der Rahmenvorrichtung weiter zu erhöhen, erweist es sich als vorteilhaft, wenn die Koppeleinrichtung eine auf der der Spanneinheit gegenüberliegenden Seite des vorderen und hinteren Koppelmittels angeordnete Halteeinheit umfasst, durch die in der gefügten Anordnung des Rahmens eine Relativbewegung des vorderen Rahmenteils gegenüber dem hinteren Rahmenteil entgegen der Fügerichtung zumindest begrenzbar oder begrenzt ist.

Grundsätzlich kann die Halteeinheit beliebig ausgebildet werden, solange die technische Funktion erfüllt wird, dass das vordere Rahmenteil und das hintere Rahmenteil durch diese festgelegt werden.

Die Halteeinheit lässt sich einfach und kostengünstig ausgestalten, wenn die Halteeinheit mindestens ein am vorderen Koppelmittel oder am hinteren Koppelmittel angeordnetes Hintergriffelement, das einen quer zur Fügerichtung erstreckten Hintergriffabschnitt umfasst, und mindestens ein am hinteren Koppelmittel bzw. am vorderen Koppelmittel angeordnetes Haltemittel aufweist, in das das Hintergriffelement mit dem Hintergriffabschnitt quer oder schräg zur Fügerichtung eingreifbar ist.

Darüber hinaus erweist es sich als vorteilhaft, wenn die Koppeleinrichtung zwischen der Spanneinheit und der Halteeinheit mindestens eine Umlenkeinheit umfasst, durch die beim Fügen des vorderen Rahmenteils mit dem hinteren Rahmenteil zumindest ein Teil der durch die Spanneinheit in Fügerichtung erzeugten Spannkraft quer oder schräg zur Fügerichtung umleitbar ist.

Hierdurch wird das Hintergriffelement beim Fügen des vorderen Rahmenteils an das hintere Rahmenteil, insbesondere beim Spannen des Spannmittels, quer oder schräg zur Fügerichtung in Richtung Haltemittel bewegt. Hierdurch wird ein Verspannen quer zur Fügerichtung erzielt, wodurch die Stabilität der Rahmenvorrichtung weiter erhöht ist.

Die Umlenkeinheit lässt sich einfach und kostengünstig ausgestalten, wenn die Umlenkeinheit mindestens einen am vorderen Koppelmittel angeordneten vorderen Gleitkörper, der auf der dem hinteren Koppelmittel zugewandten Seite eine schräg zur Fügerichtung erstreckte vordere Gleitfläche umfasst, und mindestens einen am hinteren Koppelmittel angeordneten hinteren Gleitkörper aufweist, der auf der dem vorderen Koppelmittel zugewandten Seite eine schräg zur Fügerichtung erstreckte hintere Gleitfläche umfasst.

Solchenfalls gleitet der vordere Gleitkörper an der hinteren Gleitfläche des hinteren Gleitkörpers zumindest beim Spannen des Spannhebels des Spannmittels aufeinander ab, wobei in Abhängigkeit der Schräge bezüglich der Fügerichtung die in Fügerichtung erstreckte Spannkraft eine Komponente quer zur Fügerichtung erfährt.

Bei einer Ausführungsform der Rahmenvorrichtung umfasst der vordere Gleitkörper und/oder der hintere Gleitkörper an ihren Schrägflächen eine Neigung bezüglich der Fügerichtung von 10 bis 60°, insbesondere 20 bis 40°, insbesondere 30 bis 45°.

Das Spannmittel, das Aufnahmemittel, das Hintergriffelement, das Haltemittel, der vordere Gleitkörper und/oder der hintere Gleitkörper, können grundsätzlich unlösbar an dem vorderen Koppelmittel, bzw. an dem hinteren Koppelmittel festgelegt sein. Beispielsweise können die genannten Teile im Zuge der Fertigung mit dem vorderen Koppelmittel und/oder mit dem hinteren Koppelmittel ein gemeinsames Bauteil umfassen.

Darüber hinaus ist es denkbar, dass das Spannmittel, das Aufnahmemittel, das Hintergriffelement, das Haltemittel, der vordere Gleitkörper und/oder der hintere Gleitkörper lösbar an dem vorderen Koppelmittel oder dem hinteren Koppelmittel festlegbar oder festgelegt sind.

Solchenfalls können die einzelnen Bauteile mit dem vorderen Koppelmittel, bzw. mit dem hinteren Koppelmittel verschraubt sein.

Bei einer Ausführungsform der Rahmenvorrichtung ist vorgesehen, dass das hintere Rahmenteil mindestens ein hinteres Rahmendreieck aufweist, das durch das Sattelrohr und zwei vom Sattelrohr in Richtung einer Hinterradaufnahme erstreckte Rahmenstreben gebildet ist, wobei die Rahmenstreben jeweils mit einem Ende am Sattelrohr festgelegt sind und mit ihrem jeweils anderen Ende im Bereich der Hinterradaufnahme aneinander festgelegt sind und/oder dass das vordere Rahmenteil mindestens einen Lenker und/oder eine Gabel mit mindestens einer Vorderradaufnahme umfasst, wobei der Lenker und die Gabel am Steuerrohr drehbar festlegbar sind.

Bei einer Ausführungsform der Rahmenvorrichtung sind zwei hintere Rahmendreiecke vorgesehen, die parallel oder schräg zueinander verlaufen und am Sattelrohr festgelegt sind. Zwischen den beiden Rahmendreiecken ist solchenfalls das Hinterrad angeordnet.

Um die Rahmenvorrichtung besonders kompakt zu transportieren oder zu bevorraten, erweist es sich als vorteilhaft, wenn die Rahmenvorrichtung mindestens eine Transporteinrichtung umfasst, durch die das vordere Rahmenteil und das hintere Rahmenteil in einer voneinander getrennten Anordnung in einer Transportanordnung derart aneinander festlegbar sind, dass eine Drehachse eines in der Hinterradaufnahme angeordneten Hinterrads und eine Drehachse eines in der Vorderradaufnahme angeordneten Vorderrads miteinander fluchten.

Wenn die Drehachse des Hinterrads und die Drehachse Vorderrads miteinander fluchten ist gewährleistet, dass die Räder frei drehbar sind.

Durch das Anordnen des vorderen Rahmenteils und des hinteren Rahmenteils in der Transportanordnung, in der das Vorderrad und das Hinterrad miteinander fluchten, kann ein Bediener die Rahmenvorrichtung in der Transportanordnung unter Zuhilfenahme des Vorderrads und des Hinterrads einfach bewegen. Die Rahmenvorrichtung lässt sich in der Transportanordnung besonders kompakt ausbilden, wenn der Abstand zwischen der Drehachse eines in der Hinterradaufnahme angeordneten Hinterrads zum Bereich des hinteren Koppelmittels, in den das Unterrohr mündet, den Abstand zwischen der Drehachse es in der Vorderradaufnahme angeordneten Vorderrads zum Lenker umfasst.

Ferner erweist es sich als vorteilhaft, wenn die Transporteinrichtung eine Radfestlegeeinheit umfasst, die zwischen Hinterradaufnahme und Vorderradaufnahme angeordnet ist.

Solchenfalls wird die Gefahr reduziert, dass sich die Drehachse des Hinterrads bezüglich der Drehachse des Vorderrads verschiebt oder verdreht.

In Weiterbildung letztgenannter Ausführungsform erweist es sich als vorteilhaft, wenn die Radfestlegeeinheit ein, insbesondere L-förmiges, Hinterradfestlegemittel umfasst, das einen quer oder schräg zur Drehachse des Hinterrads erstreckten konischen Vorsprung umfasst und/oder dass die Radfestlegeeinheit ein, insbesondere L-förmiges, Vorderradfestlegemittel umfasst, das eine quer oder schräg zur Drehachse des Vorderrads erstreckten konischen Aussparung umfasst, die korrespondierend, insbesondere komplementär, zum konischen Vorsprung ausgebildet ist und in der der konische Vorsprung anordenbar ist.

Solchenfalls ist die Radfestlegeeinheit einfach herstellbar und vorderes Rahmenteil und hinteres Rahmenteil im Bereich des Hinterrads, bzw. des Vorderrads schnell und einfach miteinander fügbar.

Darüber hinaus erweist es sich als vorteilhaft, wenn die Transporteinrichtung mindestens eine Lenkerfestlegeeinheit umfasst, die zwischen dem Lenker und dem hinteren Koppelmittel angeordnet ist.

Solchenfalls ist der Lenker am hinteren Koppelmittel des hinteren Rahmenteils festgelegt, wodurch der Lenker daran gehindert wird, beim Bewegen der Rahmenvorrichtung verdreht zu werden.

Hierbei erweist es sich insbesondere als vorteilhaft, wenn der Lenker und die Gabel entkoppelbar relativ zueinander verdrehbar sind und/oder wenn die Lenkerfestlegeeinheit ein am Lenker festlegbares oder festgelegtes stegförmiges Eingreifmittel umfasst, das in eine korrespondierende Ausnehmung im hinteren Koppelmittel eingreifbar ist, insbesondere wobei die korrespondieren Ausnehmung durch das Haltemittel gebildet ist.

Dadurch, dass der Lenker und die Gabel entkoppelbar relativ zueinander verdrehbar sind, kann der Lenker zum Festlegen in der Transportanordnung beispielsweise um 90° bezüglich des Vorderrads gedreht werden, wodurch die Längserstreckungsrichtung des Lenkers quer zur Drehachsenrichtung des Vorderrads anordenbar ist.

Dadurch, dass am Lenker ein stegförmiges Eingreifmittel anordenbar ist, ist der Lenker auf einfache Weise an dem hinteren Koppelmittel festlegbar.

Schließlich kann bei einer Ausführungsform der Rahmenvorrichtung vorgesehen sein, dass die Transporteinrichtung mindestens eine Rahmenfestlegeeinheit umfasst, die zwischen dem vorderen Koppelmittel des vorderen Rahmenteils und dem Abschnitt des Oberrohrs des hinteren Rahmenteils oder dem oberen Bereich des Sattelrohres angeordnet ist und durch die das vordere Rahmenteil gegen eine Bewegung relativ zum hinteren Rahmenteil festlegbar oder festgelegt ist.

Hierdurch kann vermieden werden, dass das vordere Rahmenteil, das in der Transportanordnung zwischen Vorderrad und Lenker mit dem Steuerrohr drehbar angeordnet ist, unbeabsichtigt bewegt wird.

Weitere Merkmale, Einzelheiten und Vorteile der Erfindung ergeben sich aus den beigefügten Patentansprüchen, aus der zeichnerischen Darstellung und nachfolgender Beschreibung einer bevorzugten Ausführungsform der Rahmenvorrichtung.

In der Zeichnung zeigt:
- Figur 1: Eine Seitenansicht auf ein Ausführungsbeispiel der Rahmenvorrichtung in einer gefügten Anordnung;
- Figur 2: Eine Vorderansicht auf ein zweites Koppelmittel des Ausführungsbeispiels gemäß Figur 1 sowie eine geschnittene Ansicht entlang der Linie AA;
- Figur 3: Eine perspektivische Ansicht des Ausführungsbeispiels gemäß Figur 1 mit voneinander getrennten vorderem Rahmenteil und hinterem Rahmenteil;
- Figur 4: Eine perspektivische Ansicht eines zweiten Ausführungsbeispiels der Rahmenvorrichtung in einer Transportanordnung;
- Figur 5: Eine Draufsicht auf das Ausführungsbeispiel gemäß Figur 4;
- Figur 6: Eine perspektivische Detailansicht im Bereich des Lenkers des Ausführungsbeispiels gemäß Figur 4 sowie eine Vorderansicht auf das perspektivisch dargestellte Detail.
- Figur 7: Eine perspektivische Detailansicht im Bereich der Hinterradaufnahme des Ausführungsbeispiels gemäß Figur 4 sowie eine Draufsicht auf das perspektivisch dargestellte Detail.

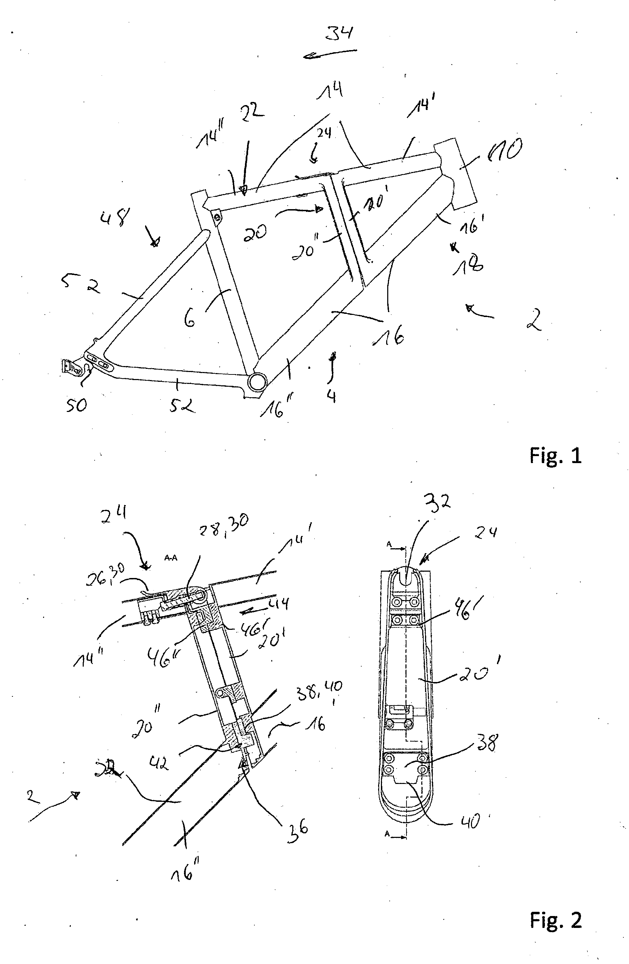

Die Figuren 1 bis 3 zeigen ein erstes Ausführungsbeispiel einer insgesamt mit dem Bezugszeichen 2 versehenen Rahmenvorrichtung für ein Neigefahrzeug. Die Rahmenvorrichtung 2 umfasst einen trapezförmigen Rahmen 4, der ein Sattelrohr 6, in dem oder an dem zumindest eine Satteleinheit 8 des Neigefahrzeugs anordenbar ist und der mindestens ein Steuerrohr 10, in dem oder an dem zumindest eine Lenkereinheit 12 des Neigefahrzeugs umfasst. Sattelrohr 6 und Steuerrohr 10 sind zum einen durch ein am Sattelrohr 6 und am Steuerrohr 10 festgelegtes Oberrohr 14 und durch ein am Sattelrohr 6 und am Steuerrohr 10 angeordnetes und zum Oberrohr 14 beabstandetes Unterrohr 16 miteinander verbunden.

Die in allen Figuren ersichtliche Rahmenvorrichtung 2 umfasst einen teilbaren Rahmen 4. Dieser umfasst ein vorderes Rahmenteil 18, das durch das Steuerrohr 10, einen vorderen Abschnitt des Oberrohrs 14', einen vorderen Abschnitt des Unterrohrs 16' sowie einem vorderen Koppelmittel 20' gebildet ist. Durch das vordere Koppelmittel 20' ist das vordere Rahmenteil 18 in sich geschlossen. Darüber hinaus umfasst der Rahmen 4 ein hinteres Rahmenteil 22, das Sattelrohr 6, einen hinteren Abschnitt des Oberrohrs 14", einen hinteren Abschnitt des Unterrohrs 16" sowie ein hinteres Koppelmittel 20" umfasst. Auch das hintere Rahmenteil 22 ist durch die einzelnen Komponenten in sich geschlossen.

Vorderes Koppelmittel 20' und hinteres Koppelmittel 20" sind Teil einer Koppeleinrichtung 20, durch die das vordere Rahmenteil 18 und das hintere Rahmenteil 22 lösbar aneinander festlegbar sind. Um das vordere Rahmenteil 18 auf einfache Weise mit dem hinteren Rahmenteil 22 zu verbinden, umfasst die Koppeleinrichtung 20 eine Spanneinheit 24. Die Spanneinheit 24 umfasst bei dem in den Figuren 1 bis 7 dargestellten Ausführungsbeispielen jeweils einen Spannhebel 26 und ein Spannglied 28. Spannhebel 26 und Spannglied 28 sind bei den in den Figuren dargestellten Ausführungsbeispielen jeweils am hinteren Koppelmittel 20" im vorderen Bereich des hinteren Abschnitts des Oberrohrs 14" angeordnet. Spannhebel 26 und Spannglied 28 sind Elemente eines Spannmittels 30.

Darüber hinaus umfasst die Spanneinheit 24 ein am vorderen Rahmenteil 18 festgelegtes Aufnahmemittel 32, das mit dem Spannmittel 30 funktional zusammenwirkt. Bei dem in den Figuren gezeigten Ausführungsbeispiel umfasst das Aufnahmemittel 32 eine Nut, in das ein als Bolzen ausgebildete Spannglied 28 einlegbar und bezüglich einer Fügerichtung 34 einen Hintergriff bildet.

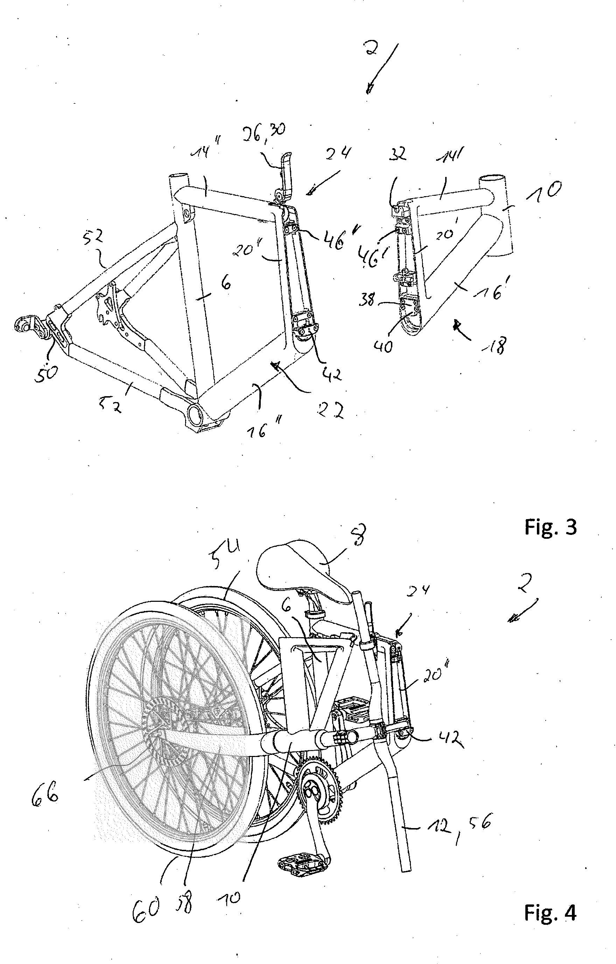

Mit Blick in die Figuren 2 und 3 ist ersichtlich, dass die Koppeleinrichtung 20 auf der der Spanneinheit 24 gegenüberliegenden Seite an dem vorderen Koppelmittel 20' und an dem hinterem Koppelmittel 20" eine Halteeinheit 36 umfasst, durch die eine Relativbewegung des vorderen Rahmenteils 18 zum hinteren Rahmenteil 22 begrenzt ist. Die Halteeinheit 36 weist hierzu ein am vorderen Koppelmittel 20' angeordnetes Hintergriffelement 38 auf, das einen quer zur Fügerichtung 34 erstreckten Hintergriffabschnitt 40 umfasst. Mit diesem ist das Hintergriffelement 38 in ein am hinteren Koppelmittel 20" angeordnetes Haltemittel 42 eingreifbar.

Darüber hinaus umfassen die in den Figuren 1 bis 7 dargestellten Ausführungsbeispiele eine Umlenkeinheit 44, die zwischen der Spanneinheit 24 und der Halteeinheit 36 angeordnet ist. Die Umlenkeinheit 44 dient dazu, die beim Fügen des vorderen Rahmenteils 18 an das hintere Rahmenteil 22 aufgebrachte Spannkraft in Richtung quer oder schräg zur Fügerichtung 34 umzuleiten. Hierzu umfass die Umlenkeinheit 44 einen am vorderen Koppelmittel 20' angeordneten vorderen Gleitkörper 46' und einen am hinteren Koppelmittel 20" angeordneten hinteren Gleitkörper 46". Beide Gleitkörper 46' und 46" weisen jeweils eine Gleitfläche auf, die bezüglich der Fügerichtung 34 schräg verlaufend erstreckt ist. Hierdurch wird beim Betätigen des Spannhebels 26 der Spanneinheit 24 die erzeugte Spannkraft über die schräg zur Fügerichtung 34 angestellten Gleitflächen in eine Komponente quer zur Fügerichtung 34 aufgeteilt, wodurch das Hintergriffelement 38 mit seinem Hintergriffabschnitt 40 weiter in das Haltemittel 42 hineinbewegt, bzw. aufgedrückt wird.

Darüber hinaus umfasst die Rahmenvorrichtung 2 bei denen in den Figuren gezeigten Ausführungsbeispielen ein am hinteren Rahmenteil 22 angeordnetes hinteres Rahmendreieck 48, das durch das Sattelrohr 6 und zwei vom Sattelrohr 6 in Richtung auf eine Hinterradaufnahme 50 erstreckte Rahmenstreben 52 gebildet ist.

Die Figuren 4 bis 7 zeigen ein Ausführungsbeispiel der Rahmenvorrichtung 2, bei der in der Hinterradaufnahme 50 ein Hinterrad 54 angeordnet ist.

Darüber hinaus umfasst das in den Figuren 4 bis 7 dargestellte Ausführungsbeispiele einen im vorderen Rahmenteil 18 angeordneten Lenker 56 sowie eine Gabel 58, in der ein Vorderrad 60 anordenbar ist.

Die Figuren 4 bis 7 zeigen die Rahmenvorrichtung 2 in einer Transportanordnung. In dieser fluchten die Drehachse des Hinterrads 54 und die Drehachse des Vorderrads 60 miteinander. Um ein unbeabsichtigtes Bewegen der einzelnen Komponenten der Rahmenvorrichtung 2 zu verhindern umfasst die Rahmenvorrichtung 2 eine Transporteinrichtung 62.

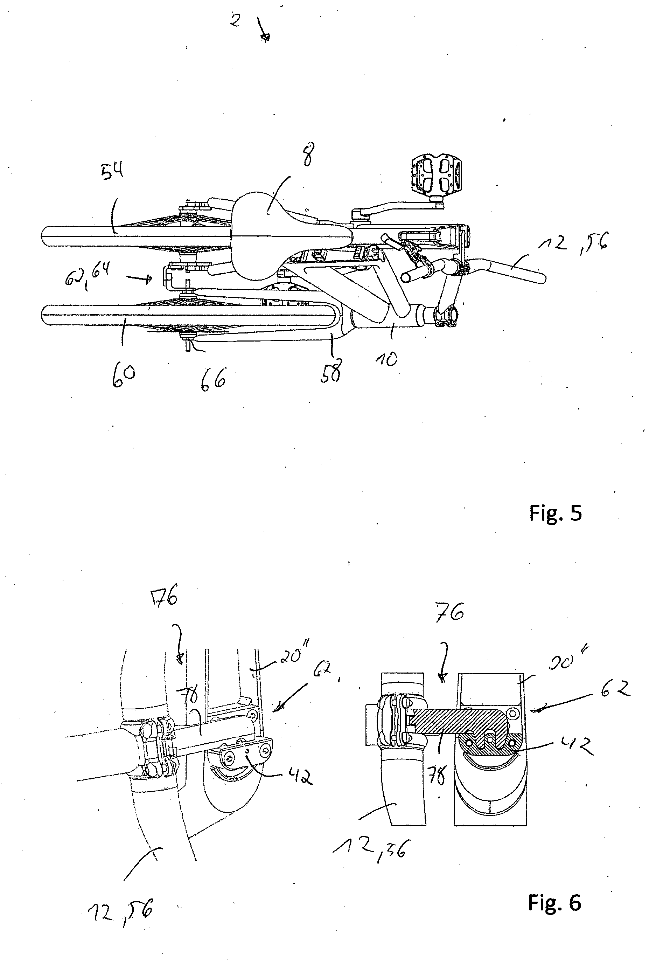

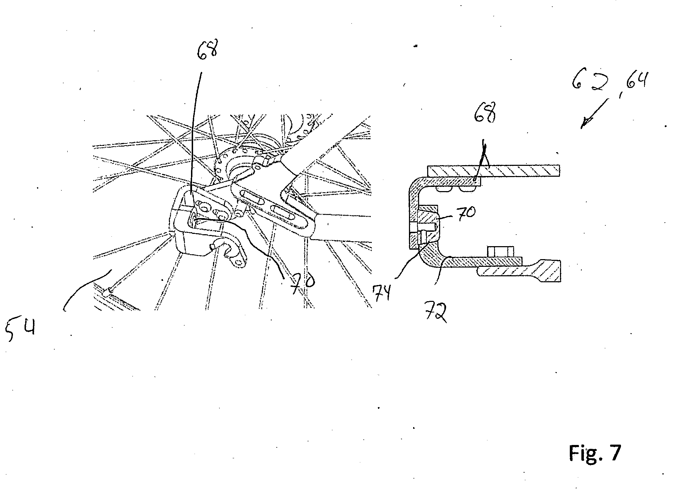

Mit Blick in die Figuren 6 und 7 umfasst die Transporteinrichtung 62 eine Radfestlegeeinheit 64, die zwischen der Hinterradaufnahme 50 und einer Vorderradaufnahme 66 angeordnet ist. Figur 7 zeigt, dass die Radfestlegeeinheit 64 ein L-förmiges Hinterradfestlegemittel 68 aufweist, das einen konischen Vorsprung 70 umfasst, der quer zur Drehachse des Hinterrads erstreckt ist. Darüber hinaus umfasst die Radfestlegeeinheit 64 ein L-förmiges Vorderradfestlegemittel 72, das eine quer zur Drehachse des Vorderrads 60 erstreckte konische Aussparung 74 umfasst, die korrespondierend, insbesondere komplementär, zum konischen Vorsprung 70 des L-förmigen Vorderradfestlegemittels 72 ausgebildet ist.

Figur 6 zeigt, dass die Transporteinrichtung 62 eine Lenkerfestlegeeinheit 76 umfasst, die zwischen dem Lenker 56 und dem hinteren Koppelmittel 20" angeordnet ist. Die Lenkerfestlegeeinheit 76 umfasst ein stegförmiges Eingreifmittel 78, das in das Haltemittel 42 der Koppeleinrichtung 20 eingefügt werden kann.

Im Folgenden wird anhand der Figuren 1 bis 3 die Wirkungsweise der Rahmenvorrichtung 2 beschrieben. Ausgehend von einer nicht gefügten Anordnung gemäß Figur 3, wird zum Fügen des Rahmens 4 der Rahmenvorrichtung 2 das vordere Rahmenteil 18 an das hintere Rahmenteil 22 durch Anordnen des vorderen Koppelmittels 20' an das hintere Koppelmittel 20" gefügt. Hierbei wird zunächst das Hintergriffelement 38 mit seinem Hintergriffabschnitt 40 in das am vorderen Koppelmittel 20' angeordnete Haltemittel 42 eingesteckt. Die sich in der geöffneten Stellung befindliche Spanneinheit 24 wird hiernach durch Verbinden des Spannglieds 28 mit dem Aufnahmemittel 32 durch Betätigen des Spannhebels 26 gespannt. Beim Betätigen des Spannhebels 26 wird das vordere Rahmenteil 18 in Fügerichtung 34 auf das hintere Rahmenteil 22 bewegt. Durch die Gleitkörper 46' und 46" der Umlenkeinheit 44 wird beim Betätigen des Spannhebels 26 der Spanneinheit 24 neben einer Kraft in Fügerichtung 34 auch eine Kraft quer zur Fügerichtung 34 erzeugt. Hierdurch wird das Hintergriffelement 38 weiter in Richtung auf das Haltemittel 42 bewegt.

Zum leichteren Transportieren der Rahmenvorrichtung 2 wird eine Anordnung des vorderen Rahmenteils 18 zum hinteren Rahmenteil 22 gemäß der Figuren 4 bis 7 erzielt. Hierzu werden zunächst das Vorderrad 60 und das Hinterrad 54 derart zueinander angeordnet, dass deren Drehachsen miteinander fluchten. Hierbei werden hinteres Rahmenteil 22 und vorderes Rahmenteil 18 durch die Radfestlegeeinheit 64 miteinander verbunden. Um eine Bewegung des Lenkers 56 der Lenkereinheit 12 zu begrenzen, wird dieser mittels der Lenkerfestlegeeinheit 76 am hinteren Koppelmittel 20" festgelegt.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen wesentlich sein.

### Bezugszeichenliste

- 2: Rahmenvorrichtung
- 4: Rahmen
- 6: Sattelrohr
- 8: Satteleinheit
- 10: Steuerrohr
- 12: Lenkereinheit
- 14: Oberrohr
- 14': vorderer Abschnitt des Oberrohrs
- 14": hinterer Abschnitt des Oberrohrs
- 16: Unterrohr
- 16': vorderer Abschnitt des Unterrohrs
- 16": hinterer Abschnitt des Unterrohrs
- 18: vorderes Rahmenteil
- 20: Koppeleinrichtung
- 20': vorderes Koppelmittel
- 20": hinteres Koppelmittel
- 22: hinteres Rahmenteil
- 24: Spanneinheit
- 26: Spannhebel
- 28: Spannglied
- 30: Spannmittel
- 32: Aufnahmemittel
- 34: Fügerichtung
- 36: Halteeinheit
- 38: Hintergriffelement
- 40: Hintergriffabschnitt
- 42: Haltemittel
- 44: Umlenkeinheit
- 46': vorderer Gleitkörper
- 46": hinterer Gleitkörper
- 48: hinteres Rahmendreieck
- 50: Hinterradaufnahme
- 52: Rahmenstrebe
- 54: Hinterrad
- 56: Lenker
- 58: Gabel
- 60: Vorderrad
- 62: Transporteinrichtung
- 64: Radfestlegeeinheit
- 66: Vorderradaufnahme
- 68: Hinterradfestlegemittel
- 70: Vorsprung
- 72: Vorderradfestlegemittel
- 74: Aussparung
- 76: Lenkerfestlegeeinheit
- 78: Eingreifmittel

## Patentansprüche

1. Rahmenvorrichtung (2) für ein Neigefahrzeug mit mindestens einem trapez- oder dreiecksförmigen Rahmen (4), der mindestens ein Sattelrohr (6), in dem oder an dem zumindest eine Satteleinheit (8) des Neigefahrzeugs anordenbar oder angeordnet ist, der mindestens ein Steuerrohr (10), in dem oder an dem zumindest eine Lenkereinheit (12) des Neigefahrzeugs anordenbar oder angeordnet ist, der mindestens ein zwischen Sattelrohr (6) und Steuerrohr (10) angeordnetes und an Sattelrohr (6) und Steuerrohr (10) festgelegtes Oberrohr (14) und der mindestens ein zwischen Sattelrohr (6) und Steuerrohr (10) angeordnetes und an Sattelrohr (6) und Steuerrohr (10) festgelegtes Unterrohr (16) umfasst, welches zumindest am Sattelrohr (6) berührungsfrei zum Oberrohr (14) beabstandet festgelegt ist, wobei der Rahmen (4) teilbar ist und ein vorderes Rahmenteil (18), das das Steuerrohr (10), einen vorderen Abschnitt des Oberrohrs (14') und einen vorderen Abschnitt des Unterrohrs (16') umfasst, und ein hinteres Rahmenteil (22) aufweist, das das Sattelrohr (6), einen hinteren Abschnitt des Oberrohrs (14") und einen hinteren Abschnitt des Unterrohrs (16") umfasst, und mit mindestens einer Koppeleinrichtung (20), durch die vorderes Oberrohr (14') und hinteres Oberrohr (14") und/oder vorderes Unterrohr (16') und hinteres Unterrohr (16") miteinander fluchtend aneinander lösbar festlegbar sind, wobei die Koppeleinrichtung (20) ein vorderes Koppelmittel (20') umfasst, das sich von einem freien Ende des vorderen Abschnitts des Oberrohrs (14') bis zu einem freien Ende des vorderen Abschnitts des Unterrohrs (16') stegartig erstreckt und an den freien Enden der vorderen Abschnitte des Oberrohrs (14') und des Unterrohrs (16') festgelegt ist und wobei die Koppeleinrichtung (20) ein hinteres Koppelmittel (20") umfasst, das sich von einem freien Ende des hinteren Abschnitts des Oberrohrs (14") bis zu einem freien Ende des hinteren Abschnitts des Unterrohrs (16") stegartig erstreckt und an den freien Enden der hinteren Abschnitte des Oberrohrs (14") und des Unterrohrs (16") festgelegt ist, wobei vorderes Koppelmittel (20') und hinteres Koppelmittel (20") in der gefügten Anordnung des Rahmens zumindest bereichsweise flächenhaft aneinander anliegen, und wobei die Koppeleinrichtung (20) mindestens eine Spanneinheit (24) umfasst, durch die das vordere Rahmenteil (18) und das hintere Rahmenteil (22) entlang einer Fügerichtung (34) aneinander festlegbar sind, **dadurch gekennzeichnet, dass** die Spanneinheit (24) mindestens ein einen Spannhebel (26) und ein Spannglied (28) umfassendes Spannmittel (30), insbesondere ein Schnellspannmittel (30), am vorderen Koppelmittel (20') oder am hinteren Koppelmittel (20") und mindestens ein mit dem Spannmittel (30) funktional zusammenwirkendes Aufnahmemittel (32) am hinteren Koppelmittel (20"), bzw. am vorderen Koppelmittel (20') umfasst, an dem oder in dem das Spannmittel (30) mit dem Spannglied (28) einen Hintergriff bezüglich der Fügerichtung (34) bildend festlegbar ist.

2. Rahmenvorrichtung (2) nach Anspruch 1, **dadurch gekennzeichnet, dass** die Koppeleinrichtung (20) eine auf der der Spanneinheit (24) gegenüberliegenden Seite des vorderen und hinteren Koppelmittels (20', 20") angeordnete Halteeinheit (36) umfasst, durch die in der gefügten Anordnung des Rahmens (4) eine Relativbewegung des vorderen Rahmenteils (18) gegenüber dem hinteren Rahmenteil (22) entgegen der Fügerichtung (34) zumindest begrenzbar oder begrenzt ist.

3. Rahmenvorrichtung (2) nach Anspruch 2, **dadurch gekennzeichnet, dass** die Halteeinheit (36) mindestens ein am vorderen Koppelmittel (20') oder am hinteren Koppelmittel (20") angeordnetes Hintergriffelement (38), das einen quer zur Fügerichtung (34) erstreckten Hintergriffabschnitt (40) umfasst, und mindestens ein am hinteren Koppelmittel (20"), bzw. am vorderen Koppelmittel (20') angeordnetes Haltemittel (42) aufweist, in das das Hintergriffelement (38) mit dem Hintergriffabschnitt (40) quer oder schräg zur Fügerichtung (34) eingreifbar ist.

4. Rahmenvorrichtung (2) nach Anspruch 2 oder 3, **dadurch gekennzeichnet, dass** die Koppeleinrichtung (20) zwischen der Spanneinheit (24) und der Halteeinheit (36) mindestens eine Umlenkeinheit (44) umfasst, durch die beim Fügen des vorderen Rahmenteils (18) mit dem hinteren Rahmenteil (22) zumindest ein Teil der durch die Spanneinheit (24) in Fügerichtung (34) erzeugten Spannkraft quer oder schräg zur Fügerichtung (34) umleitbar ist.

5. Rahmenvorrichtung (2) nach Anspruch 4, **dadurch gekennzeichnet, dass** die Umlenkeinheit (44) mindestens einen am vorderen Koppelmittel (20') angeordneten vorderen Gleitkörper (46'), der auf der dem hinteren Koppelmittel (20") zugewandten Seite eine schräg zur Fügerichtung (34) erstreckte vordere Gleitfläche umfasst, und mindestens einen am hinteren Koppelmittel (20") angeordneten hinteren Gleitkörper (46") aufweist, der auf der dem vorderen Koppelmittel (20') zugewandten Seite eine schräg zur Fügerichtung (34) erstreckte hintere Gleitfläche umfasst.

6. Rahmenvorrichtung (2) nach Anspruch 5, **dadurch gekennzeichnet, dass** das Spannmittel (30), das Aufnahmemittel (32), das Hintergriffelement (38), das Haltemittel (42), der vordere Gleitkörper (46') und/oder der hintere Gleitkörper (46") lösbar an dem vorderen Koppelmittel (20') oder dem hinteren Koppelmittel (20") festlegbar oder festgelegt sind.

7. Rahmenvorrichtung (2) nach Anspruch 6, **dadurch gekennzeichnet, dass** das hintere Rahmenteil (22) mindestens ein hinteres Rahmendreieck (48) aufweist, das durch das Sattelrohr (6) und zwei vom Sattelrohr (6) in Richtung einer Hinterradaufnahme (50) erstreckte Rahmenstreben (52) gebildet ist, wobei die Rahmenstreben (52) jeweils mit einem Ende am Sattelrohr (6) festgelegt sind und mit ihrem jeweils anderen Ende im Bereich der Hinterradaufnahme (50) aneinander festgelegt sind und/oder dass das vordere Rahmenteil (18) mindestens einen Lenker (56) und/oder eine Gabel (58) mit mindestens einer Vorderradaufnahme (66) umfasst, wobei der Lenker (56) und die Gabel (58) am Steuerrohr (10) drehbar festlegbar sind.

8. Rahmenvorrichtung (2) nach mindestens einem der vorhergehenden Ansprüche, **gekennzeichnet durch** mindestens eine Transporteinrichtung (62), durch die das vordere Rahmenteil (18) und das hintere Rahmenteil (22) in einer voneinander getrennten Anordnung in einer Transportanordnung derart aneinander festlegbar sind, dass eine Drehachse eines in der Hinterradaufnahme (50) angeordneten Hinterrads (54) und eine Drehachse eines in der Vorderradaufnahme (66) angeordneten Vorderrads (60) miteinander fluchten.

9. Rahmenvorrichtung (2) nach Anspruch 8, **dadurch gekennzeichnet, dass** der Abstand zwischen der Drehachse eines in der Hinterradaufnahme (50) angeordneten Hinterrads (54) zum Bereich des hinteren Koppelmittels (20"), in den das Unterrohr (16) mündet, den Abstand zwischen der Drehachse es in der Vorderradaufnahme (66) angeordneten Vorderrads (60) zum Lenker (56) umfasst.

10. Rahmenvorrichtung (2) nach Anspruch 8 oder 9, **dadurch gekennzeichnet, dass** die Transporteinrichtung (62) eine Radfestlegeeinheit (64) umfasst, die zwischen Hinterradaufnahme (50) und Vorderradaufnahme (66) angeordnet ist.

11. Rahmenvorrichtung (2) nach Anspruch 10, **dadurch gekennzeichnet, dass** die Radfestlegeeinheit (64) ein, insbesondere ein L-förmiges, Hinterradfestlegemittel (68) umfasst, das einen quer oder schräg zur Drehachse des Hinterrads (54) erstreckten konischen Vorsprung (70) umfasst und/oder dass die Radfestlegeeinheit (64) ein, insbesondere ein L-förmiges, Vorderradfestlegemittel (72) umfasst, das eine quer oder schräg zur Drehachse des Vorderrads (60) erstreckten konischen Aussparung (74) umfasst, die korrespondierend, insbesondere komplementär, zum konischen Vorsprung (70) ausgebildet ist und in der der konische Vorsprung (70) anordenbar ist.

12. Rahmenvorrichtung (2) nach einem der Ansprüche 8 bis 11, **dadurch gekennzeichnet, dass** die Transporteinrichtung (62) mindestens eine Lenkerfestlegeeinheit (76) umfasst, die zwischen dem Lenker (56) und dem hinteren Koppelmittel (20") angeordnet ist.

13. Rahmenvorrichtung (2) nach Anspruch 12, **dadurch gekennzeichnet, dass** der Lenker (56) und die Gabel (58) entkoppelbar relativ zueinander verdrehbar sind und/oder dass die Lenkerfestlegeeinheit (76) ein am Lenker (56) festlegbares oder festgelegtes stegförmiges Eingreifmittel (78) umfasst, das in eine korrespondierende Ausnehmung im hinteren Koppelmittel (20") eingreifbar ist, insbesondere wobei die korrespondieren Ausnehmung durch das Haltemittel (42) gebildet ist.

14. Rahmenvorrichtung (2) nach einem der Ansprüche 9 bis 13, **dadurch gekennzeichnet, dass** die Transporteinrichtung (62) mindestens eine Rahmenfestlegeeinheit umfasst, die zwischen dem vorderen Koppelmittel (20') des vorderen Rahmenteils (18) und dem Abschnitt des Oberrohrs (14) des hinteren Rahmenteils (22) oder dem oberen Bereich des Sattelrohres (6) angeordnet ist und durch die das vordere Rahmenteil (18) gegen eine Bewegung relativ zum hinteren Rahmenteil (22) festlegbar oder festgelegt ist.

15. Neigefahrzeug mit mindestens einer Rahmenvorrichtung (2) nach einem der Ansprüche 1 bis 14.

## Claims

1. Frame assembly (2) for a tilting vehicle with at least one trapezoid or triangle-shaped frame (4) which comprises at least one saddle tube (6), in which or on which at least one saddle unit (8) of the tilting vehicle is or can be arranged, which comprises at least one control tube (10), in which or on which at least one steering unit (12) of the tilting vehicle is or can be arranged, which comprises at least one top tube (14) arranged between the saddle tube (6) and the control tube (10) and attached to the saddle tube (6) and the control tube (10), and which comprises at least one bottom tube (16) - arranged between the saddle tube (6) and the control tube (10) and attached to the saddle tube (6) and the control tube (10) - which is at least attached to the saddle tube (6) at a distance such that it is not touching the top tube (14), whereby the frame (4) can be split and has a forward part (18), comprising the control tube (10), a forward part of the upper tube (14') and a forward part of the bottom tube (16'), and a rear part (22), comprising the saddle tube (6), a rear part of the upper tube (14") and a rear part of the bottom tube (16"), and also includes a least one coupling mechanism (20), by means of which the forward top tube (14') and rear top tube (14") and/or the forward bottom tube (16') and rear bottom tube (16") can be attached to and detached from one another flush, whereby the coupling mechanism (20) comprises a forward coupling device (20') which stretches in a web form from a free end of the forward section of the top tube (14') to a free end of the forward section of the bottom tube (16') and which is attached to the free ends of the forward sections of the top tube (14') and of the bottom tube (16'), and whereby the coupling mechanism (20) comprises a rear coupling device (20") which stretches in a web form from a free end of the rear section of the top tube (14") to a free end of the rear section of the bottom tube (16") and which is attached to the free ends of the rear sections of the top tube (14") and of the bottom tube (16"), whereby the surfaces of the forward coupling device (20') and of the rear coupling device (20") lie on one another at least in each individual area when the frame is coupled, and whereby the coupling device (20) comprises at least one clamping unit (24), by means of which the forward part of the frame (18) and the rear part (22) can be attached to one another along the direction of coupling (34), **characterised by the fact** that the clamping unit (24) comprises at least a clamp (30) comprised of a clamping lever (26) and a tendon (28), in particular a quick-clamp (30), on the forward coupling device (20') or the rear coupling device (20"), and at least one receiver component (32), which cooperates functionally with the clamp (30), on the rear coupling device (20") or on the forward coupling device (20'), to which or in which the clamp (30) can be attached with the tendon (28) to form a rear grip in the direction of the seam (34).

2. Frame assembly (2) according to Claim 1, **characterised by** the fact that the coupling device (20) comprises a stability unit (36) arranged on that side of the forward and rear coupling device (20', 20") opposite the clamping unit (24), by means of which a relative movement of the forward part of the frame (18) against the rear part (22) counter to the direction of coupling (34) at least can be or is limited when the frame is coupled (4).

3. Frame assembly (2) according to Claim 2, **characterised by** the fact that the stability unit (36) has at least one rear grip element (38) arranged on the forward coupling device (20') or on the rear coupling device (20"), which comprises a rear grip section (40) running transverse to the direction of coupling (34), and at least one grip (42) arranged on the forward coupling device (20") or on the rear coupling device (20'), into which the rear grip element (38) can slide transverse or oblique to the direction of coupling (34) using the rear grip section (40).

4. Frame assembly (2) according to Claim 2 or 3, **characterised by** the fact that the coupling mechanism (20) between the clamping unit (24) and the stability unit (36) comprises at least one diverter unit (44), by means of which at least part of the tension generated by the clamping unit (24) in the direction of coupling (34) when coupling the forward part of the frame (18) and the rear part (22) can be diverted transverse or oblique to the direction of coupling (34).

5. Frame assembly (2) according to Claim 4, **characterised by** the fact that the diverter unit (44) has at least one forward gliding body (46'), arranged on the forward coupling device (20'), which includes a forward gliding surface transverse to the direction of coupling (34) on the side facing the rear coupling device (20"), and at least one rear gliding body (46"), arranged on the rear coupling device (20"), which includes a rear gliding surface transverse to the direction of coupling (34) on the side facing the forward coupling device (20').

6. Frame assembly (2) according to Claim 5, **characterised by** the fact that the clamp (30), the receiver component (32), the rear grip element (38), the grip (42), the forward gliding body (46') and/or the rear gliding body (46") can be or are attached to the forward coupling device (20') or the rear coupling device (20") such that they can be detached.

7. Frame assembly (2) according to Claim 6, **characterised by** the fact that the rear part of the frame (22) has at least one rear frame triangle (48) which is formed by the saddle tube (6) and two frame struts (52) leading from the saddle tube (6) in the direction of a rear wheel socket (50), whereby the frame struts (52) are both attached at one end to the saddle tube (6) and at the other end to one another in the area around the rear wheel socket (50), and/or the forward part of the frame (18) comprises at least one handlebar (56) and/or one bracket (58) with at least one forward wheel socket (66), whereby the handlebar (56) and the bracket (58) can be attached to the control tube (10) such that they can be moved.

8. Frame assembly (2) according to at least one of the preceding Claims, **characterised by** at least one transport unit (62), by means of which the forward part (18) and the rear part (22) of the frame can be attached to one another in an arrangement for transportation whereby they are arranged separately such that a swivel pin of a rear wheel (54) arranged in the rear wheel socket (50) and a swivel pin of a forward wheel (60) arranged in the forward wheel socket (66) align with one another.

9. Frame assembly (2) according to Claim 8, **characterised by** the fact that the distance between the swivel pin of a rear wheel (54) arranged in the rear wheel socket (50) and the area of the rear coupling device (20"), into which the bottom tube (16) feeds, is the distance between the swivel pin of the forward wheel (60) arranged in the forward wheel socket (66) and the handlebar (56).

10. Frame assembly (2) according to Claim 8 or Claim 9, **characterised by** the fact that the transport unit (62) comprises one wheel attachment unit (64) which is arranged between the rear wheel socket (50) and forward wheel socket (66).

11. Frame assembly (2) according to Claim 10, **characterised by** the fact that the wheel attachment unit (64) comprises one, in particular an L-shaped, rear wheel attachment device (68) which comprises a conical protrusion (70) running transverse or oblique to the swivel pin of the rear wheel (54), and/or that the wheel attachment unit (64) comprises one, in particular an L-shaped, forward wheel attachment device (72) which comprises a conical recess (74), running transverse or oblique to the swivel pin of the forward wheel (60), which is designed correspondingly, and in particular complementary, to the conical protrusion (70) and in which the conical protrusion (70) can be placed.

12. Frame assembly (2) according to one of Claims 8 to 11, **characterised by** the fact that the transport unit (62) comprises at least one handlebar attachment device (76) which is arranged between the handlebar (56) and the rear coupling device (20").

13. Frame assembly (2) according to Claim 12, **characterised by** the fact that the handlebar (56) and the bracket (58) can be decoupled relative to one another by turning, and/or that the handlebar attachment device (76) comprises a web-shaped in-slide device (78), attached or attachable to the handlebar (56), which can slide into a corresponding opening in the rear coupling device (20"), in particular whereby the corresponding opening is formed by the grip (42).

14. Frame assembly (2) according to one of Claims 9 to 13, **characterised by** the fact that the transport unit (62) comprises at least one frame attachment unit which is arranged between the forward coupling device (20') of the forward part of the frame (18) and the section of the top tube (14) of the rear part of the frame (22) or the upper part of the saddle tube (6), and by means of which the forward part of the frame (18) can be or is fixed against moving relative to the rear part of the frame (22).

15. Tilting vehicle with at least one frame assembly (2) according to one of Claims 1 to 14.

## Revendications

1. Dispositif de cadre (2) pour un véhicule basculant avec au moins un cadre (4) trapézoïdal ou triangulaire, qui présente au moins un tube de selle (6), dans ou sur lequel peut être disposée au moins une unité de selle (8) du véhicule basculant, le au moins un tube de direction (10), dans ou sur lequel peut être disposée au moins une unité de direction (12) du véhicule basculant, qui comporte au moins un tube supérieur (14) disposé entre le tube de selle (6) et le tube de direction (10) et fixé au tube de selle (6) et au tube de direction (10) et qui comporte au moins un tube inférieur (16) disposé entre le tube de selle (6) et le tube de direction (10) et fixé au tube de selle (6) et au tube de direction (10), qui est fixé sans contact au moins sur le tube de selle (6) à distance du tube supérieur (14), le cadre (4) étant divisible et présentant une partie de cadre avant (18), qui comprend le tube de direction (10), une partie avant du tube supérieur (14') et une partie avant du tube inférieur (16'), et une partie de cadre arrière (22), qui comprend le tube de selle (6), une partie arrière du tube supérieur (14") et une partie arrière du tube inférieur (16"), et comportant au moins un dispositif de couplage l'un avec l'autre, le dispositif de couplage (20) au moyen duquel le tube supérieur avant (14') et le tube supérieur arrière (14") et/ou le tube inférieur avant (16') et le tube inférieur arrière (16") peuvent être fixés de manière amovible l'un de l'autre en alignement l'un avec l'autre, le dispositif de couplage (20) comprenant un moyen de couplage avant (20'), qui s'étend sous forme de bande depuis une extrémité libre de la section avant du tube supérieur (14') jusqu'à une extrémité libre de la section avant du tube inférieur (16') et est fixé aux extrémités libres des sections avant du tube supérieur (14') et du tube inférieur (16'), et dans lequel le dispositif de couplage (20) comprend un moyen de couplage arrière (20"), lequel s'étend sou forme de bande d'une extrémité libre de la section arrière du tube supérieur (14") à une extrémité libre de la section arrière du tube inférieur (16") et est fixé aux extrémités libres des sections arrière du tube supérieur (14") et du tube inférieur (16"), des moyens de couplage avant (20') et de moyens de couplage arrière (20") s'appuyant les uns contre les autres de manière plane au moins dans certaines zones de la disposition jointe du cadre, et dans lequel le dispositif de couplage (20) comprend au moins une unité de serrage (24) au moyen de laquelle la partie avant du cadre (18) et la partie arrière du cadre (22) peuvent être fixées l'une à l'autre le long d'une direction d'assemblage (34), **caractérisé par le fait que** l'unité de serrage (24) comprend au moins un moyen de serrage (30) comprenant un levier de serrage (26) et un élément de serrage (28), en particulier un moyen de serrage rapide (30), sur le moyen de couplage avant (20') ou sur le moyen de couplage arrière (20") et au moins un moyen de réception (32), qui coopère fonctionnellement avec le moyen de serrage (30), sur le moyen de couplage arrière (20"), ou sur le moyen d'attelage avant (20'), sur lequel ou dans lequel le moyen de serrage (30) peut être fixé avec l'élément de serrage (28) pour former un engagement arrière par rapport à la direction d'assemblage (34).

2. Dispositif de cadre (2) selon la revendication 1, **caractérisé par le fait que** le dispositif de couplage (20) comprend une unité de maintien (36) disposée sur le côté des moyens de couplage avant et arrière (20', 20") opposé à l'unité de serrage (24), au moyen de laquelle, dans la disposition jointive du cadre (4), un mouvement relatif de la partie avant du cadre (18) par rapport à la partie arrière du cadre (22) dans le sens inverse de la direction d'assemblage (34) peut au moins être limité ou restreint.

3. Dispositif de cadre (2) selon la revendication 2, **caractérisé par le fait que** l'unité de maintien (36) comprend au moins un élément de préhension arrière (38) disposé sur le moyen de couplage avant (20') ou sur le moyen de couplage arrière (20"), qui comprend une section de préhension arrière (40) s'étendant transversalement à la direction d'assemblage (34), et au moins un moyen de maintien (42) disposé sur le moyen de couplage arrière (20") ou sur le moyen de coulage avant (20') , dans lequel l'élément de préhension arrière (38) peut être engagé avec la section de préhension arrière (40) transversalement ou obliquement par rapport à la direction d'assemblage (34).

4. Dispositif de cadre (2) selon la revendication 2 ou 3, **caractérisé par le fait que** le dispositif de couplage (20) entre l'unité de serrage (24) et l'unité de maintien (36) comprend au moins une unité de changement de direction (44) au moyen de laquelle, lors de l'assemblage de la partie avant du cadre (18) avec la partie arrière du cadre (22), au moins une partie de la force de serrage générée par l'unité de serrage (24) dans la direction d'assemblage (34) peut être déviée transversalement ou obliquement par rapport à la direction d'assemblage (34).

5. Dispositif de cadre (2) selon la revendication 4, **caractérisé par le fait que** l'unité de changement de direction (44) comprend au moins un corps coulissant avant (46') disposé sur le moyen de couplage avant (20'), qui, sur le côté tourné vers le moyen de couplage arrière (20"), comprend une surface de glissement avant s'étendant obliquement par rapport à la direction d'assemblage (34), et présente au moins un corps coulissant arrière (46") disposé sur le moyen de couplage arrière (20"), qui comprend, sur le côté tourné vers le moyen de couplage avant (20'), une surface coulissante arrière s'étendant obliquement par rapport à la direction d'assemblage (34).

6. Dispositif de cadre (2) selon la revendication 5, **caractérisé par le fait que** le moyen de serrage (30), le moyen de réception (32), l'élément de préhension arrière (38), le moyen de maintien (42), le corps coulissant avant (46') et/ou le corps coulissant arrière (46") peuvent être ou sont fixés de manière amovible au moyen de couplage avant (20') ou au moyen de couplage arrière (20").

7. Dispositif de cadre (2) selon la revendication 6, **caractérisé par le fait que** la partie arrière du cadre (22) comprend au moins un triangle de cadre arrière (48) formé par le tube de selle (6) et deux entretoises de cadre (52) s'étendant à partir du tube de selle (6) en direction d'un récepteur de roue arrière (50), dans lequel les montants du cadre (52) sont fixés chacun par une extrémité au tube de selle (6) et sont fixés l'un à l'autre par leur autre extrémité respective dans la zone du logement de la roue arrière (50) et/ou que la partie avant du cadre (18) comprend au moins un guidon (56) et/ou une fourche (58) avec au moins un logement de roue avant (66), le guidon (56) et la fourche (58) pouvant être fixés de manière rotative au tube de direction (10).

8. Dispositif de cadre (2) selon au moins une des revendications précédentes, **caractérisé par** au moins un dispositif de transport (62) au moyen duquel la partie de cadre avant (18) et la partie de cadre arrière (22) peuvent être fixées l'une à l'autre suivant un agencement séparé dans un dispositif de transport de telle sorte qu'un axe de rotation d'une roue arrière (54) disposée dans le logement de roue arrière (50) et un axe de rotation d'une roue avant (60) disposée dans le logement de roue avant (66) sont alignés l'un avec l'autre.

9. Dispositif de cadre (2) selon la revendication 8, **caractérisé par le fait que** la distance entre l'axe de rotation d'une roue arrière (54) disposée dans le récepteur de roue arrière (50) et la zone du moyen de couplage arrière (20") dans laquelle débouche le tube diagonal (16), comprend la distance entre l'axe de rotation de sa roue avant (60) disposée dans le récepteur de roue avant (66) et le guidon (56).

10. Dispositif de cadre (2) selon la revendication 8 ou 9, **caractérisé par le fait que** le dispositif de transport (62) comprend une unité de fixation de roue (64) disposée entre le récepteur de roue arrière (50) et le récepteur de roue avant (66).

11. Dispositif de châssis (2) selon la revendication 10, **caractérisé en ce que** l'unité de fixation de roue (64) comprend en particulier un moyen de fixation de roue arrière (68) comprenant une saillie conique (70) s'étendant transversalement ou obliquement à l'axe de rotation de la roue arrière (54) et/ou **en ce que** l'unité de fixation de roue (64), en particulier un moyen de fixation de la roue avant (72) en forme de L, qui comporte un évidement conique (74) s'étendant transversalement ou obliquement par rapport à l'axe de rotation de la roue avant (60), qui est formé de manière correspondante, en particulier complémentaire, à la saillie conique (70) et dans lequel la saillie conique (70) peut être disposée.

12. Dispositif de cadre (2) selon l'une des revendications 8 à 11, **caractérisé par le fait que** le dispositif de transport (62) comprend au moins une unité de fixation de guidon (76) qui est disposée entre le guidon (56) et le moyen de couplage arrière (20").

13. Dispositif de cadre (2) selon la revendication 12, **caractérisé par le fait que** le guidon (56) et la fourche (58) peuvent tourner de manière découplée l'un par rapport à l'autre et/ou que l'unité de fixation du guidon (76) comprend un moyen d'engagement en forme de bande (78) qui peut être fixé ou est fixé au guidon (56) et qui peut s'engager dans un évidement correspondant dans le moyen de couplage arrière (20"), en particulier dans lequel l'évidement correspondant est formé par le moyen de maintien (42).

14. Dispositif de cadre (2) selon l'une des revendications 9 à 13, **caractérisé par le fait que** le dispositif de transport (62) comprend au moins une unité de fixation de cadre qui est disposée entre le moyen de couplage avant (20') de la partie avant du cadre (18) et la section du tube supérieur (14) de la partie arrière du cadre (22) ou la zone supérieure du tube de selle (6) et au moyen de laquelle la partie avant du cadre (18) peut être fixée ou immobilisée contre tout mouvement par rapport à la partie arrière du cadre (22).

15. Véhicule basculant avec au moins un dispositif de châssis (2) selon l'une des revendications 1 à 14.
